# FASCICULE DE BREVET EUROPEEN

(11) **EP 1 327 788 B1**
(45) Date de publication et mention de la délivrance du brevet: **11.08.2010**
(21) Numéro de dépôt: 02292891.5
(22) Date de dépôt: 21.11.2002
(51) Int. Cl.: F16C 33/80, F16J 15/44, H02K 5/173, F16C 33/72, F16J 15/40

(54) **Ensemble comportant des éléments de roulement**
Wälzlager aufweisende Vorrichtung
Device comprising rolling bearings

(30) Priorité: 14.01.2002 FR 0200367
(43) Date de publication de la demande: 16.07.2003
(73) Titulaire: MOTEURS LEROY-SOMER, 16000 Angouleme (FR)
(72) Inventeur: Begue, Jean, 45000 Orleans (FR)
(74) Mandataire: Tanty, François

(56) Documents cités:
- EP-A- 0 289 610
- AU-B2- 433 891
- DE-A- 3 211 715
- DE-U1- 8 612 560
- US-A- 3 774 982
- US-A- 4 257 617
- PATENT ABSTRACTS OF JAPAN vol. 010, no. 379 (E-465), 18 décembre 1986 (1986-12-18) & JP 61 170251 A (TOSHIBA CORP), 31 juillet 1986 (1986-07-31)

## Description

La présente invention concerne le domaine des roulements et plus particulièrement un ensemble comportant une cage et des éléments de roulement placés à l'intérieur de la cage, ces éléments de roulement étant destinés à supporter un arbre traversant la cage, cette dernière comportant des parties d'étanchéité de part et d'autre des éléments de roulement.

Les parties d'étanchéité peuvent comporter, de manière conventionnelle, des reliefs tels que des rainures, permettant de retenir un lubrifiant à l'intérieur de la cage, notamment lorsque l'arbre tourne à une vitesse élevée et que des joints s'appliquant sur l'arbre ne sont pas utilisables.

L'invention vise à améliorer la fiabilité des éléments de roulement, en permettant notamment de réduire les risques de fuite de lubrifiant au niveau des parties d'étanchéité, notamment lorsque les pressions de l'air à l'extérieur de la cage de part et d'autre de celle-ci ne sont pas les mêmes, ce qui peut être le cas par exemple lorsque la cage est montée sur le flasque d'extrémité d'une machine électrique tournante et que celle-ci comporte un ventilateur tournant à l'intérieur de la carcasse de la machine.

La demande AU 438891 divulgue un ensemble comportant une cage et des éléments de roulement placés à l'intérieur de la cage, les éléments de roulement étant destinés à supporter un arbre traversant ladite cage, cette dernière comportant des parties d'étanchéité de part et d'autre desdits éléments de roulement, cet ensemble comportant au moins une communication entre deux espaces formés entre lesdites parties d'étanchéité et l'arbre.

La communication précitée permet de réduire le risque que du lubrifiant ne soit entraîné par un courant d'air qui circulerait entre l'arbre et l'une au moins des parties d'étanchéité.

Les espaces formés entre les parties d'étanchéité et l'arbre peuvent être par exemple définis par des gorges annulaires des parties d'étanchéité.

Les parties d'étanchéité sont de préférence sans contact avec l'arbre.

Les parties d'étanchéité peuvent comporter des reliefs tels que des rainures. L'ensemble peut comporter par exemple des reliefs tels que des rainures de part et d'autre de chacun desdits espaces, pour retenir le lubrifiant dans la cage.

Selon la revendication 1, les rainures sont hélicoïdales.

La communication précitée peut par exemple comporter des canaux réalisés à l'intérieur de parois de la cage.

La cage peut par exemple comporter au moins deux demi-coques, encore appelées fonds de cage, disposées respectivement de part et d'autre des éléments de roulement.

Chaque demi-coque peut par exemple être réalisée d'un seul tenant avec une partie d'étanchéité, par exemple par fonderie.

La communication précitée peut comporter au moins un canal intérieur réalisé dans l'une au moins des demi-coques.

Dans une mise en oeuvre particulière de l'invention, la cage comporte une pièce intermédiaire entre les deux demi-coques. Cette pièce intermédiaire peut servir de support à une bague au contact de laquelle roulent les éléments de roulement.

La communication peut comporter au moins un canal réalisé dans la pièce intermédiaire, par exemple quatre canaux.

La pièce intermédiaire peut en outre comporter au moins un canal permettant une circulation de lubrifiant entre deux régions de la cage situées de part et d'autre des éléments de roulements. Ce canal peut s'étendre par exemple selon un axe incliné faisant un angle non nul par rapport à l'axe de l'arbre, pour permettre l'écoulement de lubrifiant pulvérisé dans la cage vers un orifice de vidange.

La pièce intermédiaire peut par exemple être agencée pour se fixer sur des flasques d'extrémité d'une carcasse de machine électrique.

Au moins l'une des parties d'étanchéité peut comporter une gorge de récupération du lubrifiant, cette gorge étant disposée entre des rainures débouchant sur l'arbre, et communicant par au moins un canal avec l'intérieur de la cage.

Dans une mise en oeuvre de l'invention, les éléments de roulement peuvent comporter des billes. Dans l'exemple décrit, l'ensemble peut comporter deux bagues entre lesquelles les éléments de roulement roulent, l'une des bagues étant au contact de l'arbre, et l'autre bague étant au contact de la cage, par exemple au contact de la pièce intermédiaire précitée lorsque celle-ci existe.

Dans une mise en oeuvre de l'invention, l'ensemble est adapté à recevoir un organe de pulvérisation apte à pulvériser du lubrifiant à l'intérieur de la cage.

Le diamètre de l'arbre au niveau des roulements peut par exemple être supérieur ou égal à 50 mm, et notamment supérieur ou égal à 100 mm.

Dans une mise en oeuvre particulière de l'invention, la cage comporte un point bas avec un orifice de vidange du lubrifiant.

La cage peut être, en fonctionnement, au moins partiellement remplie par un lubrifiant qui est par exemple de l'huile.

L'invention concerne également une machine tournante qui comporte au moins un ensemble tel que décrit précédemment. Cette machine peut comporter par exemple un ventilateur à l'intérieur de la carcasse de la machine, lequel ventilateur peut être par exemple entraîné en rotation par l'arbre.

La machine peut comporter au moins un conduit débouchant d'une part dans ladite au moins une communication et d'autre part à l'intérieur de la carcasse de la machine, à la sortie du ventilateur.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 est une vue schématique et partielle, avec une coupe axiale de certaines pièces constitutives, d'un exemple de machine électrique à laquelle peut s'appliquer l'invention,
- la figure 2 est une vue de face, selon la flèche II de la figure 1, de la demi-coque intérieure de la cage,
- la figure 3 est une vue de face, selon la flèche III de la figure 1, de la demi-coque extérieure de la cage,
- la figure 4 est une coupe schématique selon IV-IV de la figure 2,
- la figure 5 est une coupe schématique selon V-V de la figure 3,
- la figure 6 est une coupe schématique selon VI-VI de la figure 3,
- la figure 7 est une demi-coupe axiale schématique de l'ensemble, les demi-coques intérieure et extérieure étant observées en coupe, selon VII-VII des figures 2 et 3,
- la figure 8 est une demi-coupe axiale schématique de l'ensemble, les demi-coques intérieure et extérieure étant observées en coupe, selon VIII-VIII des figures 2 et 3,
- la figure 9 représente un détail de l'arbre, et
- la figure 10 est une vue en coupe schématique et partielle d'une variante de réalisation.

Dans toute la description qui suit, y compris les revendications, l'expression « comportant un » doit être comprise comme signifiant « comportant au moins un », sauf si le contraire est spécifié.

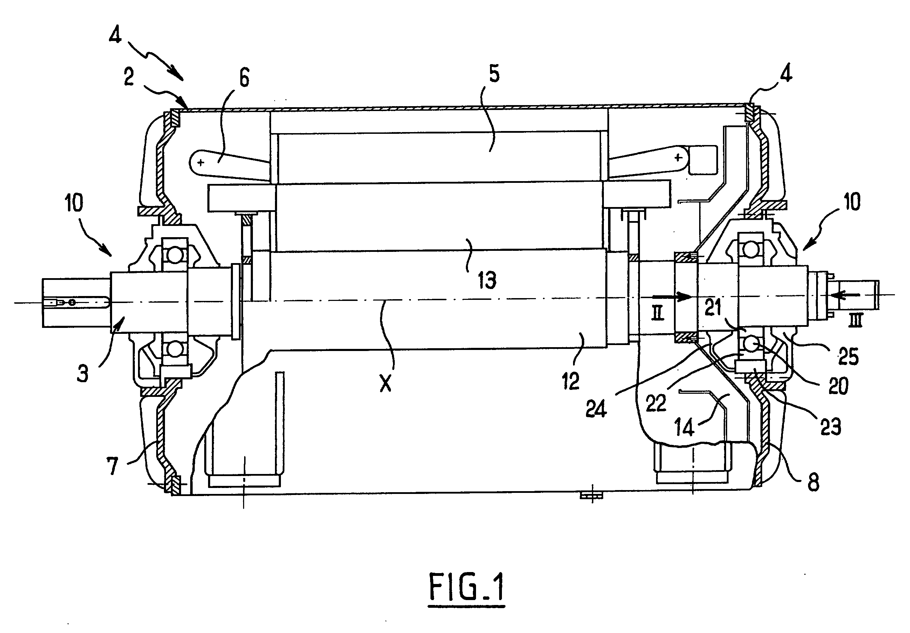

On a représenté sur la figure 1 une machine électrique 1 comportant un stator 2 et un rotor 3 d'axe X.

Le stator 2 comporte une carcasse 4 à l'intérieur de laquelle est disposé un circuit magnétique 5 comportant un empilage de tôles magnétiques et comportant des bobinages 6, de manière conventionnelle.

La carcasse 4 comporte des flasques d'extrémité 7 et 8 supportant chacun un ensemble 10 contenant des éléments de roulement. Les deux ensembles 10 n'ont été représentés que partiellement et très schématiquement sur la figure 1, dans un souci de clarté du dessin. Les deux ensembles 10 sont disposés symétriquement l'un de l'autre par rapport à un plan médian perpendiculaire à l'axe X.

Le rotor 3 comporte un arbre 12 qui porte un circuit magnétique 13 comportant un empilage de tôles magnétiques et un ventilateur 14 permettant de générer un courant d'air de refroidissement à l'intérieur de la machine.

Chaque ensemble 10 comporte des éléments de roulement 20, constitués dans l'exemple de réalisation décrit par des billes, tournant entre deux bagues 21 et 22, la bague 21, radialement la plus intérieure, étant au contact de l'arbre 12, et la bague 22, radialement la plus extérieure, étant au contact d'une pièce intermédiaire 23 disposée entre une demi-coque intérieure 24 et une demi-coque extérieure 25, les demi-coques 24 et 25 et la pièce intermédiaire 23 constituant une cage abritant les éléments de roulement 20.

Pour lubrifier les éléments de roulement 20, un lubrifiant est pulvérisé en continu, durant le fonctionnement de la machine, à l'intérieur de la cage par au moins un organe de pulvérisation, non représenté.

Le lubrifiant utilisé est par exemple de l'huile.

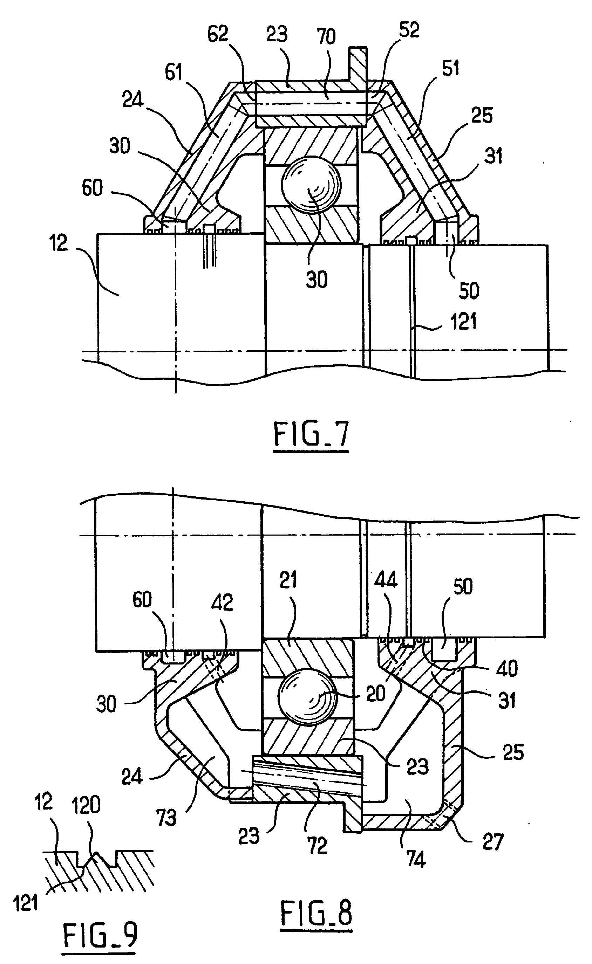

L'huile pulvérisée à l'intérieur de la cage peut être recueillie en un point bas de celle-ci par un orifice de vidange 27, que l'on peut voir sur la figure 8.

Les demi-coques 24 et 25 comportent des parties d'étanchéité annulaires respectives 30 et 31.

Chaque partie d'étanchéité 30 ou 31 s'étend sans contact avec l'arbre et comporte des reliefs 40 destinés à s'opposer à un départ de lubrifiant par le jeu existant entre les parties d'étanchéité et l'arbre.

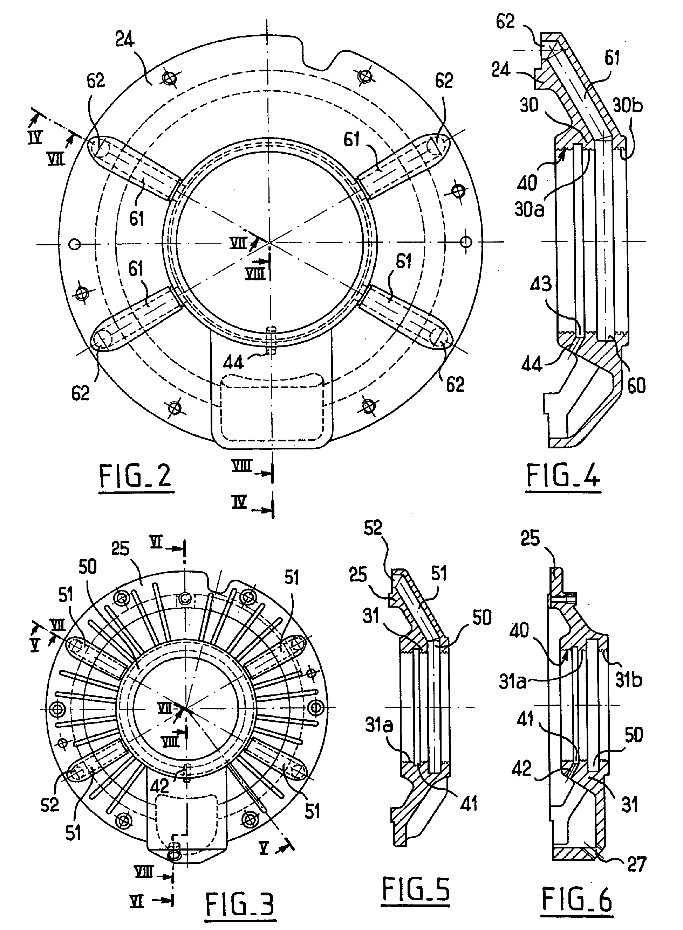

Dans l'exemple illustré, ces reliefs 40 comportent des rainures hélicoïdales. La partie d'étanchéité de la demi-coque extérieure 25 peut ainsi comporter par exemple une rainure hélicoïdale 31a, 31b constituée par un filetage ISO à filet triangulaire ayant un pas de 5 mm à gauche. Une gorge 41 de récupération du lubrifiant est réalisée sur la partie filetée 31a et communique avec l'intérieur de la cage par un canal 42, comme on peut le voir sur la figure 6.

La partie d'étanchéité 30 de la demi-coque intérieure 24 comporte également une partie filetée 30a, 30b et une gorge de récupération 43 similaire, communiquant par un canal 44 avec l'intérieur de la cage, comme on peut le voir sur la figure 4.

L'arbre comporte, en regard de chaque gorge 41 ou 43 de récupération du lubrifiant, une crête annulaire 120 située au fond d'une gorge 121, la crête 120 permettant de projeter le lubrifiant présent sur l'arbre, par centrifugation, dans la gorge de récupération.

L'orientation des filetages est choisie, compte tenu du sens de rotation de la machine, pour que les rainures tendent à ramener le lubrifiant dans la cage.

Une gorge annulaire 50 est réalisée dans la partie d'étanchéité 31 et débouche sur l'arbre 12. Cette gorge 50 communique avec des canaux 51, au nombre de quatre dans l'exemple illustré, chacun de ces canaux 51 débouchant par un orifice 52 sur la tranche de la demi-coque extérieure 25, comme on peut le voir sur la figure 5.

La demi-coque intérieure 24 comporte, de manière similaire, une gorge 60 communiquant par l'intermédiaire de canaux 61, au nombre de quatre dans l'exemple illustré, avec des orifices 62 correspondants, débouchant sur sa tranche.

Les orifices 52 sont disposés symétriquement par rapport à un plan médian vertical, comme on peut le voir sur la figure 3. Il en est de même des orifices 62.

On remarquera que, aussi bien pour la demi-coque intérieure 24 que pour la demi-coque extérieure 25, les parties d'étanchéité 30 et 31 comportent des régions respectives 30b et 31b, s'étendant à une faible distance de l'arbre et pourvues de reliefs tels que par exemple des rainures hélicoïdales, ces régions 30b et 31b s'étendant entre les gorges 60 et 50 et l'extrémité de la demi-coque opposée à l'autre demi-coque.

Les canaux 51 et 61 communiquent entre eux par l'intermédiaire de canaux 70 réalisés dans la pièce intermédiaire 23, au nombre de quatre dans l'exemple illustré, ces canaux ayant des extrémités débouchant au regard des orifices 52 et 62, comme on peut le voir sur la figure 7.

La pièce intermédiaire 23 comporte également au moins un canal 72 permettant d'établir une communication entre deux régions 73 et 74 de la cage située de part et d'autre des éléments de roulement 20, comme on peut le voir sur la figure 8. Ce canal 72 permet au lubrifiant de s'écouler vers l'orifice de vidange 27.

Les canaux 51, 61 et 70 permettent d'établir une communication entre les gorges 50 et 60, qui permet de réduire les risques de fuite de lubrifiant au cours du fonctionnement de la machine 1.

En effet, le ventilateur 14 crée une dépression à l'extérieur de l'ensemble 10 adjacent, du côté de la demi-coque intérieure 24.

En l'absence de la communication précitée, du lubrifiant pourrait être entraîné par de l'air circulant par le jeu entre l'arbre et les parties d'étanchéité 30 et 31, en raison de la dépression précitée.

La communication entre les gorges 50 et 60 permet de remédier à ce problème en équilibrant les pressions.

De manière similaire, pour l'ensemble 10 situé du côté gauche de la machine, une surpression est créée par le ventilateur 14 à l'extérieur de l'ensemble 10, du côté de la demi-coque intérieure 24. En l'absence de la communication précitée, du lubrifiant pourrait être entraîné par de l'air circulant entre l'arbre et les parties d'étanchéité.

Pour diminuer la fuite d'air de la cage vers le ventilateur 14 le long de l'arbre 12, on peut établir une communication entre les canaux 51, 61 et 70 et l'intérieur de la carcasse.

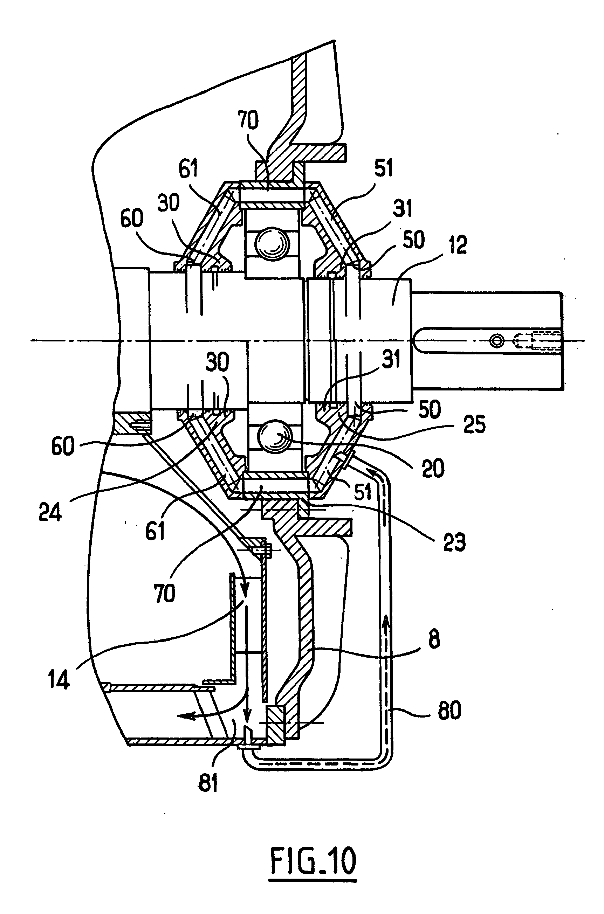

A titre d'exemple, on a représenté à la figure 10 un conduit 80 débouchant d'une part à la sortie 81 du ventilateur 14 à l'intérieur de la carcasse, et d'autre part dans le canal 51 de la demi-coque extérieure 25 de l'ensemble 10 situé du côté du ventilateur 14.

Ce conduit 80 permet d'amener de l'air issu du ventilateur 14 dans les gorges 50 et 60 de part et d'autre du roulement, et de refouler vers le roulement l'huile qui tendrait à s'écouler vers la dépression créée par le ventilateur 14 à l'extérieur de l'ensemble 10.

La présence du conduit 80 est d'autant plus avantageuse lorsque la machine fonctionne avec une inclinaison tendant à faire couler le lubrifiant vers le ventilateur 14, ou s'il existe des différences de pression relativement importantes entre l'extérieur et l'intérieur de la machine du côté du ventilateur 14, notamment si la vitesse de rotation de celui-ci est élevée.

Bien entendu, l'invention n'est pas limitée à l'exemple de réalisation qui vient d'être décrit.

En particulier, les billes 20 peuvent être remplacées par d'autres éléments de roulement tels que par exemple des aiguilles, des rouleaux cylindriques ou coniques.

Les éléments de roulement peuvent reprendre des efforts purement radiaux ou radiaux et axiaux.

L'invention peut s'appliquer à des machines autres que des machines électriques tournantes, notamment des machines thermiques.

On peut donner, sans sortir du cadre de la présente invention, des formes aux demi-coques différentes de celles illustrées et en particulier, on peut réaliser un ensemble conforme à l'invention avec seulement deux demi-coques assemblées l'une contre l'autre, sans pièce intermédiaire.

Les canaux intérieurs de la cage peuvent être remplacés par des canaux formés au moyen de pièces rapportées. Les canaux peuvent présenter des sections diverses, circulaires ou autres.

Le profil des rainures peut être triangulaire ou autre, notamment rectangulaire ou trapézoïdal.

## Revendications

1. Ensemble comportant une cage (24, 25 ; 23) et des éléments de roulement (20) placés à l'intérieur de la cage, les éléments de roulement étant destinés à supporter un arbre (12) traversant ladite cage, cette dernière comportant des parties d'étanchéité (30, 31) s'étendant de part et d'autre desdits éléments de roulement, l'ensemble comportant au moins une communication (51 ; 70 ; 61) entre deux espaces (50 ; 60) formés entre lesdites parties d'étanchéité (30, 31) et l'arbre (12) **caractérisé par le fait qu'**au moins l'une des parties d'étanchéité comporte des rainures hélicoïdales (30a ; 31a).

2. Ensemble selon la revendication précédente, **caractérisé par le fait que** lesdits espaces sont définis par des gorges annulaires (50 ; 60) des parties d'étanchéité (31 ; 30).

3. Ensemble selon l'une quelconque des revendications précédentes, **caractérisé par le fait que** les parties d'étanchéité (30, 31) sont sans contact avec l'arbre (12).

4. Ensemble selon l'une quelconque des revendications précédentes, **caractérisé par le fait que** les parties d'étanchéité (30, 31) comportent des rainures (40).

5. Ensemble selon l'une quelconque des revendications précédentes, **caractérisé par le fait qu'**il comporte des reliefs, notamment des rainures (30a, 30b ; 31a, 31b) de part et d'autre de chacun desdits espaces.

6. Ensemble selon l'une quelconque des revendications précédentes, **caractérisé par le fait que** ladite communication comporte des canaux (51 ; 61 ; 70) réalisés à l'intérieur des parois de la cage.

7. Ensemble selon l'une quelconque des revendications précédentes, **caractérisé par le fait que** la cage comporte au moins deux demi-coques (24, 25) disposées respectivement de part et d'autre desdits éléments de roulement (20).

8. Ensemble selon la revendication 7, **caractérisé par le fait que** chaque demi-coque (24, 25) est réalisée d'un seul tenant avec une partie d'étanchéité, notamment par fonderie.

9. Ensemble selon l'une quelconque des revendications 7 ou 8, **caractérisé par le fait que** la communication comporte au moins un canal intérieur (51 ; 61) réalisé dans l'une au moins des demi-coques.

10. Ensemble selon l'une quelconque des revendications 7 à 9, **caractérisé par le fait que** la cage comporte une pièce intermédiaire (23) entre les deux demi-coques (24, 25).

11. Ensemble selon la revendication précédente, **caractérisé par le fait que** la communication comporte au moins un canal (70) réalisé dans la pièce intermédiaire (23), notamment au moins quatre canaux (70).

12. Elément selon l'une quelconque des revendications 10 ou 11, **caractérisé par le fait que** ladite pièce intermédiaire comporte au moins un canal (72) permettant une circulation de lubrifiant entre deux régions (73, 74) de la cage situées de part et d'autre des éléments de roulements.

13. Ensemble selon la revendication précédente, **caractérisé par le fait que** ledit au moins un canal (72) s'étend selon un axe incliné faisant un angle non nul par rapport à l'axe (X) de l'arbre.

14. Ensemble selon l'une quelconque des revendications 10 à 13, **caractérisé par le fait que** la pièce intermédiaire (23) est agencée pour se fixer sur des flasques d'extrémité (7, 8) d'une carcasse de machine électrique (1).

15. Ensemble selon l'une quelconque des revendications précédentes, **caractérisé par le fait qu'**au moins l'une des parties d'étanchéité comporte une gorge (41 ; 43) de récupération d'un lubrifiant, cette gorge étant disposée entre des rainures débouchant sur l'arbre et communicant par au moins un canal (42 ; 44) avec l'intérieur de la cage.

16. Ensemble selon l'une quelconque des revendications précédentes, **caractérisé par le fait que** les éléments de roulement comportent des billes (20).

17. Ensemble selon la revendication précédente, **caractérisé par le fait qu'**il comporte deux bagues (21, 22) entre lesquelles les éléments de roulement (20) roulent, l'une (21) des bagues étant au contact de l'arbre, et l'autre bague (22) étant au contact de la cage.

18. Ensemble selon l'une quelconque des revendications précédentes, **caractérisé par le fait qu'**il est adapté à recevoir un organe de pulvérisation de lubrifiant à l'intérieur de la cage.

19. Ensemble selon l'une quelconque des revendications précédentes, **caractérisé par le fait que** le diamètre de l'arbre (12) au niveau des roulements est supérieur ou égal à 50 mm, et notamment supérieur ou égal à 100 mm.

20. Ensemble selon l'une quelconque des revendications précédentes, **caractérisé par le fait que** la cage comporte un point bas avec un orifice de vidange (27) du lubrifiant.

21. ensemble selon l'une quelconque des revendications précédentes, **caractérisé par le fait que** la cage est au moins partiellement remplie, en fonctionnement, par un lubrifiant qui est de l'huile.

22. Machine tournante, **caractérisée par le fait qu'**elle comporte au moins un ensemble selon l'une quelconque des revendications 1 à 21.

23. Machine selon la revendication précédente, **caractérisée par le fait qu'**elle comporte un ventilateur (14) à l'intérieur de sa carcasse.

24. Machine selon la revendication 23, **caractérisée par le fait que** le ventilateur (14) est entraîné en rotation par l'arbre (12).

25. Machine selon l'une des revenclications 23 ou 24, **caractérisée par le fait qu'**elle comporte au moins un conduit (80) débouchant d'une part dans ladite au moins une communication (51 ; 61 ; 70) et d'autre part à l'intérieur de la carcasse de la machine, à la sortie (81) du ventilateur (14).

## Claims

1. An assembly comprising: a cage (24, 25, 23), and rolling elements (20) placed inside the cage, the rolling elements being configured for supporting a shaft (12) passing through said cage, the cage having sealing parts (30, 31) extending on either side of said rolling elements, the assembly comprising at least one communication (51, 70, 61) path between the two spaces (50, 60) formed between said sealing parts and the shaft (12), **characterized by** the fact that at least one of the sealing parts has helical fluting (30a; 31a).

2. An assembly according to the preceding claim, wherein said spaces are defined by annular grooves (50, 60) in the sealing parts (31, 30).

3. An assembly according to any preceding claim, wherein the sealing parts (30, 31) do not make contact with the shaft (12).

4. An assembly according to any preceding claim, wherein the sealing parts (30, 31) include fluting (40).

5. An assembly according to any preceding claim, comprising portions in relief, particular fluting (30a, 30b, 31a, 31b) on either side of each said spaces.

6. An assembly according to any preceding claim, wherein said at least one communication path comprises channels (51, 61, 70) made inside walls of the cage.

7. An assembly according to claim 1, wherein the cage comprises at least two half-shells (24, 25) disposed respectively on either side of said rolling elements (20).

8. An assembly according to claim 7, wherein each half-shell (24, 25) is made integrally with a sealing part, in particular by casting.

9. An assembly according to claim 7 or 8, wherein the communication path comprises at least one inner channel (51, 61) made in at least one of the half-shells.

10. An assembly according to any one of claims 7 to 9, wherein the cage comprises an intermediate piece (23) between the two half-shells (24, 25).

11. An assembly according to the preceding claim, wherein the communication path comprises at least one channel (70) made in the intermediate piece (23), in particular at least four channels.

12. An element according to claim 10 or 11, wherein said intermediate piece includes at least one channel (72) enabling lubricant to circulate between two regions (73, 74) of the cage situated on either side of the rolling elements.

13. An assembly according to the preceding claim, wherein said at least one channel (72) extends along an inclined axis at a non-zero angle relative to the axis (x) of the shaft.

14. An assembly according to any one of claims 10 to 13, wherein the intermediate piece (23) is arranged to be fixed to endplates (7, 8) of an electric machine casing (1).

15. An assembly according to any preceding claim, wherein at least one of the sealing parts includes a lubricant recovery groove, said groove (41, 43) being disposed between sets of fluting opening out to the shaft and communicating via at least one channel (42, 44) with the inside of the cage.

16. An assembly according to any preceding claim, wherein the rolling elements comprise balls (20).

17. An assembly according to the preceding claim, comprising two rings (21, 22) between which the rolling elements (20) roll, one of the rings (21) being in contact with the shaft, and the other ring (22) being in contact with the cage.

18. An assembly according to any preceding claim, the assembly being adapted to receive a member for spraying lubricant inside the cage.

19. An assembly according to any preceding claim, wherein the diameter of the shaft (12) level with the rolling elements is greater than or equal to 50 mm, and in particular greater than or equal to 100 mm.

20. An assembly according to any preceding claim, wherein the cage has a low point with a lubricant emptying orifice (27).

21. An assembly according to any preceding claim, wherein in operation the cage is filled at least in part by an oil.

22. A rotary machine, comprising at least one assembly according to any one of claims 1 to 21.

23. A machine according to the preceding claim, comprising a fan (14) inside its casing.

24. A machine according to claim 23, wherein the fan (14) is rotated by the shaft (12) of the machine.

25. A machine according to any one of claims 23 or 24, comprising at least one duct (80) opening out both into said at least one communication path (51, 61, 70) and into an inside of the casing of the machine, at an outlet (81) of the fan (14).

## Patentansprüche

1. Vorrichtung, die einen Käfig (24, 25; 23) sowie im Innern des Käfigs angeordnete Rollkörper (20) aufweist, wobei die Rollkörper zur Lagerung einer Welle (12) bestimmt sind, die den Käfig durchdringt und letzterer Dichtungselemente (30, 31) aufweist, die sich von einem Teil zum andern der Rollkörper erstrecken, die weiterhin mindestens eine Verbindung (51; 70; 61) zwischen zwei Räumen (50; 60) aufweist, die zwischen den Dichtungselementen (30, 31) und der Welle (12) gebildet sind,
**dadurch gekennzeichnet,**
**dass** mindestens eines der Dichtungselemente spiralförmige verlaufende Nuten (30a; 31a) aufweist.

2. Vorrichtung nach dem vorhergehenden Anspruch,
**dadurch gekennzeichnet,**
**dass** die Räume durch ringförmige Kanäle (50; 60) in den Dichtungselementen (31; 30) gebildet sind.

3. Vorrichtung nach einem der vorhergehenden Ansprüche,
**dadurch gekennzeichnet,**
**dass** die Dichtungselemente (30, 31) keinen Kontakt mit der Welle (12) haben.

4. Vorrichtung nach einem der vorhergehenden Ansprüche,
**dadurch gekennzeichnet,**
**dass** die Dichtungselemente (30, 31) Nuten (40) aufweisen.

5. Vorrichtung nach einem der vorhergehenden Ansprüche,
**dadurch gekennzeichnet,**
**dass** sie Oberflächenstrukturen, insbesondere Nuten (30a, 30b; 31a, 31B) von einem Teil zum andern jedes der Räume aufweist.

6. Vorrichtung nach einem der vorhergehenden Ansprüche,
**dadurch gekennzeichnet,**
**dass** die besagte Verbindung Kanäle (51; 61; 70) aufweist, die im Inneren der Käfigwände verwirklicht sind.

7. Vorrichtung nach einem der vorhergehenden Ansprüche,
**dadurch gekennzeichnet,**
**dass** der Käfig mindestens zwei Halbschalen (24, 25) aufweist, die jeweils an dem einem und dem anderen Ende der Rollkörper (20) angeordnet sind.

8. Vorrichtung nach Anspruch 7,
**dadurch gekennzeichnet,**
**dass** jede Halbschale (24, 25) einteilig verbunden mit einem Dichtungselement realisiert ist, insbesondere durch Gießen.

9. Vorrichtung nach einem der Ansprüche 7 oder 8,
**dadurch gekennzeichnet,**
**dass** die Verbindung mindestens einen inneren Kanal (51; 61) aufweist, der in mindestens einer der Halbschalen verwirklicht ist.

10. Vorrichtung nach einem der Ansprüche 7 bis 9,
**dadurch gekennzeichnet,**
**dass** der Käfig ein Zwischenstück (23) zwischen den beiden Halbschalen (24, 25) aufweist.

11. Vorrichtung nach dem vorhergehenden Anspruch,
**dadurch gekennzeichnet,**
**dass** die Verbindung mindestens einen Kanal (70) in dem Zwischenstück (23) aufweist, insbesondere mindestens vier Kanäle (70).

12. Vorrichtung nach einem der Ansprüche 10 oder 11,
**dadurch gekennzeichnet,**
**dass** das Zwischenstück mindestens einen Kanal (72) aufweist, der einen Schmiermittelkreislauf zwischen zwei Bereichen (73, 74) des Käfigs erlaubt, die jeweils neben den Rollkörpern angeordnet sind.

13. Vorrichtung nach dem vorhergehenden Anspruch,
**dadurch gekennzeichnet,**
**dass** sich der mindestens eine Kanal (72) entlang einer geneigten Achse mit einem von 0 verschiedenen Winkel bezüglich de Achse (X) der Welle erstreckt.

14. Vorrichtung nach einem der Ansprüche 10 bis 13,
**dadurch gekennzeichnet,**
**dass** das Zwischenstück (23) so ausgebildet ist, um sich auf den äusseren Flanschen (7, 8) eines Elektromaschinengehäuses (1) befestigen zu lassen.

15. Vorrichtung nach einem der vorhergehenden Ansprüche,
**dadurch gekennzeichnet,**
**dass** mindestens eines der Dichtungselemente einen Kanal (41; 43) zur Rückgewinnung eines Schmiermittels aufweist, wobei der Kanal zwischen Nuten auf der Welle mündend und durch mindestens einen Kanal (42; 44) mit dem Innern des Käfigs verbindend angeordnet ist.

16. Vorrichtung nach einem der vorhergehenden Ansprüche,
**dadurch gekennzeichnet,**
**dass** die Rollkörper Kugeln (20) aufweisen.

17. Vorrichtung nach dem vorhergehenden Anspruch,
**dadurch gekennzeichnet,**
**dass** sie zwei Ringe (21, 22) aufweist, zwischen denen die Rollkörper (20) rollen, wobei einer der Ringe (21) in Kontakt mit der Welle und der andere Ring (22) in Kontakt mit dem Käfig ist.

18. Vorrichtung nach einem der vorhergehenden Ansprüche,
**dadurch gekennzeichnet,**
**dass** sie so ausgestaltet ist, dass sie ein Zerstäubungsorgan für das Schmiermittel im Innern des Käfigs aufnehmen kann.

19. Vorrichtung nach einem der vorhergehenden Ansprüche,
**dadurch gekennzeichnet,**
**dass** der Durchmesser der Welle (12) auf der Höhe der Rollkörper > oder = 50 mm, insbesondere > oder = 100 mm ist.

20. Vorrichtung nach einem der vorhergehenden Ansprüche,
**dadurch gekennzeichnet,**
**dass** der Käfig einen tiefsten Punkt mit einer Auslassöffnung (27) für das Schmiermittel aufweist.

21. Vorrichtung nach einem der vorhergehenden Ansprüche,
**dadurch gekennzeichnet,**
**dass** der Käfig mindestens teilweise, im Betrieb, mit einem Schmiermittel gefüllt ist, nämlich Öl.

22. Drehantriebsmaschine,
**dadurch gekennzeichnet,**
**dass** sie mindestens eine Vorrichtung nach einem der Ansprüche 1 bis 21 aufweist.

23. Maschine nach dem vorherigen Anspruch,
**dadurch gekennzeichnet,**
**dass** sie einen Ventilator (14) im Innern ihres Gehäuses aufweist.

24. Maschine nach Anspruch 23,
**dadurch gekennzeichnet,**
**dass** der Ventilator (14) durch die Welle (12) in Rotation versetzt wird.

25. Maschine nach einem der Ansprüche 23 oder 24,
**dadurch gekennzeichnet,**
**dass** sie mindestens eine Leitung (80) aufweist, die einerseits in der mindestens einen Verbindung (51; 61, 70) und andererseits im Gehäuseinneren der Maschine mündet und zwar am Ausgang (81) des Ventilators (14).
